# EUROPEAN PATENT APPLICATION

(11) **EP 1 103 734 A1**
(43) Date of publication of application: **30.05.2001**
(21) Application number: 00931682.9
(22) Date of filing: 02.06.2000
(51) Int. Cl.: F16B 37/08

(54) **SIMPLIFIED TIGHTENING DEVICE**

(30) Priority: 04.06.1999 JP 15761899
(71) Applicant: NHK Spring Co., Ltd., Yokohama-shi, Kanagawa 236-0004 (JP)
(72) Inventor: KITAMURA, Yoshiharu, Komagane-shi Nagano 399-4117 (JP); HEMMI, Yoshihiro, Komagane-shi Nagano 399-4117 (JP); OGINO, Takashi, Komagane-shi Nagano 399-4117 (JP)
(74) Representative: Leson, Thomas Johannes Alois, Dipl.-Ing.
(86) International application number: JP0003615
(87) International publication number: WO0075519

(57) **Abstract**

A simplified tightening device capable of reducing a bolt inserting force and also providing a high tightening force, comprising a base (1) in which a conical hole with slanted surface is formed, a thread block (2) through which a female screw (2b) to be threaded with a bolt (4) is passed and which is guided by the conical hole and expanded or contracted according to the axial movement of the bolt (4) inserted into the base (1), a spring (3) pressing the thread block (2) against the conical hole, and a cap (9) which is provided with a bolt inserting hole (9a), installed on the base (1), and presses the spring (3), wherein the inclination angle of the lower side slanted surfaces (21) of the threads (20) of the female thread (2b) on the thread block (2) is made larger than the inclination angle of the upper side slanted surface (22).

## Description

### Field of the Invention

The present invention relates to a simple fastening device that can be used in various machines, such as construction, electrical, or mechanical equipment, and that is capable of clamping by one-touch handling.

### Background of the Invention

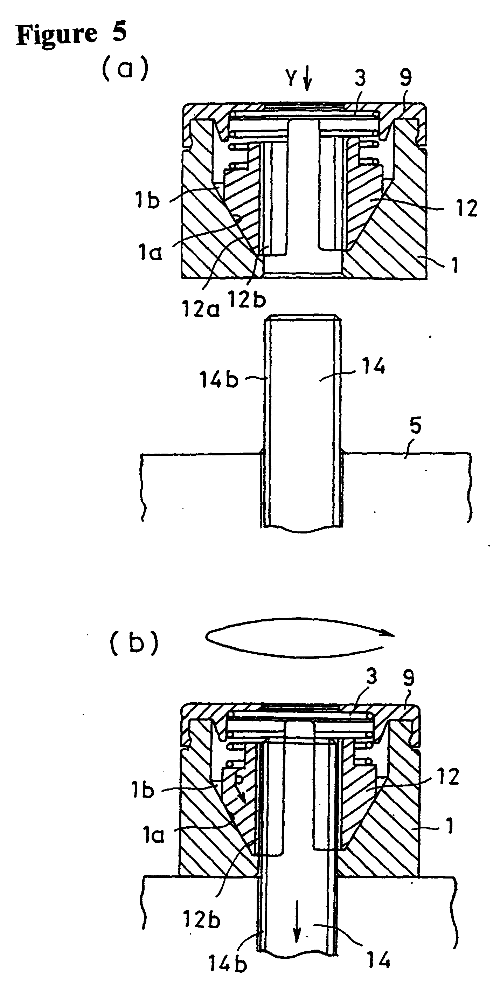

Both examined Japanese Patent Publication No. S55-48171 and unexamined Japanese Patent Publication No. H7-197922 each disclose one example of prior art of a simple fastening device that is capable of clamping by one-touch handling. Figures 5 (a) and 5 (b) illustrate the working of a simple fastening device of such prior art.

A simple fastening device has (1) a base, inside of which is a conical hole that has a slope portion, (2) a plurality of running screws that are led by the conic hole and that expand or contract in the diametrical direction, while moving up and down according to the axial movement of an inserted bolt, (3) a spring that compresses a plurality of the aforementioned running screws in the contracting direction, and (4) a cap that is a crown on the upper region of the base and that pushes down the running screws through the spring so as to make contact with the base.

The running screws have a slope portion that corresponds to the slope portion of the base. Furthermore, a female screw penetrates through the running screws in a vertical direction so as to be capable of being engaged with a male screw of the aforementioned bolt.

This simple fastening device is to be fastened by using a bolt that is fixed to an object. As shown in Figure 5 (a), pushing the bolt down in the direction indicated by the Arrow Y, the edge of the female screw that is located on the bolt side of the running screws is brought into contact with the tip end of the bolt, thereby controlling the movement of the running screws in the direction indicated by the Arrow Y. In this state, if the inserting force Fin is applied, the base moves in the direction indicated by the Arrow Y, and at the same time it compresses the spring.

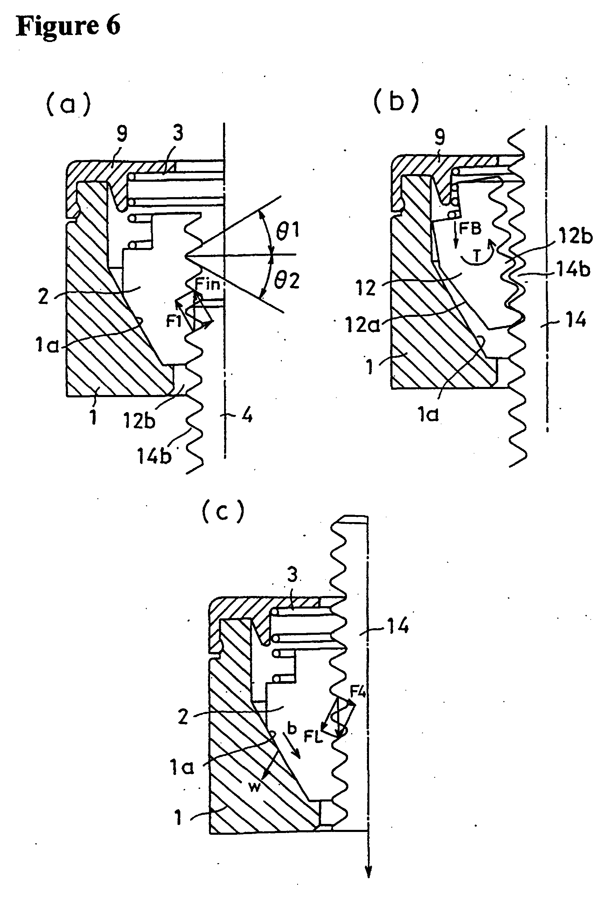

This produces a clearance between the slope portion of the running screws and the slope portion of the base, and the running screws accordingly move in the direction of the inserting force Fin with a reaction force F1 (see Figure 6 (a)) that is produced by the inserting force Fin. That is, when the running screws expand along the diametrical line and move in a diametrical direction by the height of the screw thread of the running screws, the bolt and the running screws are disengaged. This enables the insertion of one pitch of the screw. Therefore, continual application of the inserting force Fin, when combined with repetition of the above-mentioned action, enables the bolt to be inserted as far as the object without rotating the whole device.

After the insertion of the bolt until it contacts the object, if the bolt is a right-handed screw, the base is rotated in a clockwise direction, as shown by the arrow in Figure 5 (b). With this rotation, a load FL is produced on the lower-side slope of the screw thread that is on the male screw of the bolt, as shown in Figure 6 (c). As a result, the running screws are caused to move along the surface of the slope portion of the base in the direction indicated by Arrow b so as to be engaged with the bolt. The fastening work is thus completed.

However, conventional simple fastening devices have the following problems:
(1) In inserting the bolt for fastening, a lower level of the inserting force Fin brings better workability. Moreover, to disengage the bolt and the running screws, it is necessary. to move the running screws in the diametrical line by the distance of the height of the screw thread. In a conventional simple fastening device, the female screw of the running screws has the inclination angle θ1 on the lower-side slope and the inclination angle θ2 on the upper-side slope of the screw thread; both angles are 30 degrees. The bolt's male screw, which corresponds to the above-mentioned female screw, has an upper-side-slope inclination angle that equals θ1 and a lower-side-slope inclination angle that equals θ2; both angles are 30 degrees. Therefore, a high degree of inserting force is necessary, because that force must be strong enough to counter the repellent force Fb of the spring, because the diametrical-working force F1 works principally in the vertical direction.
(2) When a high degree of inserting force Fin is applied, a turning force T is accordingly applied to the running screws so as to make the screws inclined, because of the positional relationship between the working point of the force, as applied by the bolt on the running screws, and the spring, as is shown in Figure 6 (b). Consequently, it becomes difficult to disengage the male screw of the bolt and the female screw of the running screws, resulting in a galling phenomenon. This makes smooth insertion impossible and also requires a high degree of inserting force Fin.
(3) When the running screws move in the direction indicated by Arrow b, as shown in Figure 6 (c), the slope portion of the base receives a load W. This load W increases as the clamping torque that is applied increases. As a result, the base, which is incapable of resisting such a load, is damaged. To cope with such a case, it might be possible to increase the thickness of the surrounding area that receives the load W. In most cases, however, the area surrounding the simple fastening device is not spacious enough to enable the thickness to be increased, which as a practical matter means that it is impossible to increase the thickness. For this reason, it is not possible to prevent the base from being damaged by an excessively high level of clamping torque, and thus clamping cannot be performed at more than a specified load that is limited to a level that will not cause damage to the base, and also the application range is limited.
(4) In the fastening action that results from rotation after the insertion of the bolt; the fastening force is secured by the movement of the running screws in the direction indicated by Arrow b, shown in Figure 5 (b), along the slope portion of the base. In such a case, the following conditions are required to obtain a fastening force by moving the running screws 12 in the direction indicated by Arrow B with the load FL:

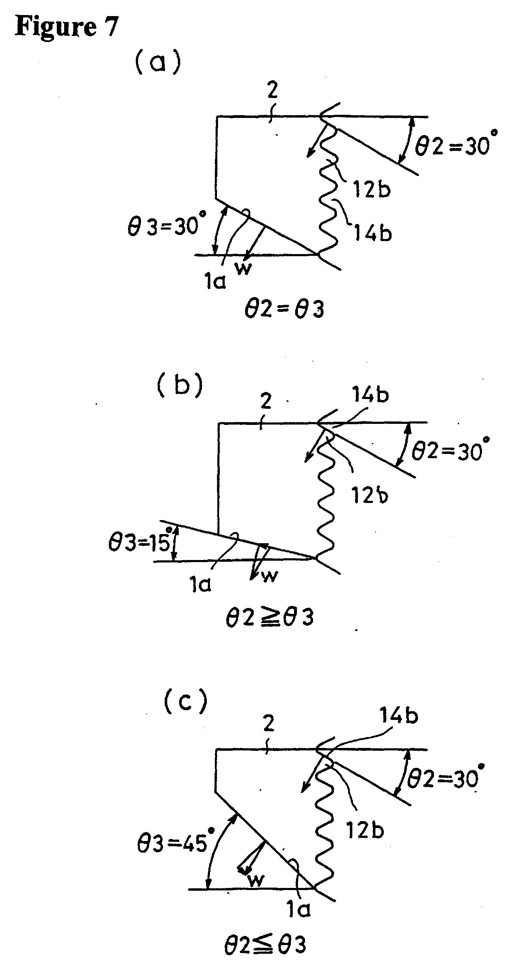

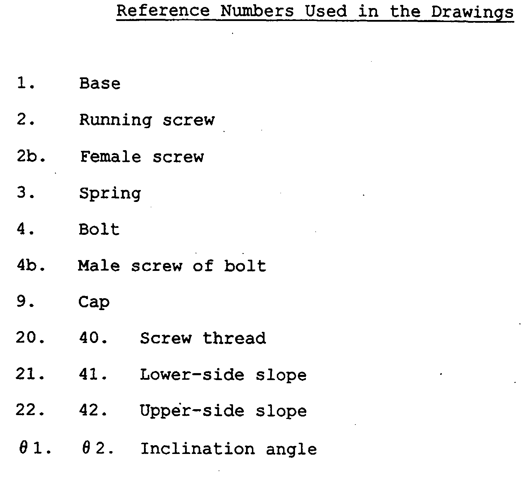

As shown in Figure 6 (c), the load FL produces the load W, which is applied to the slope portion of the base by the running screws. In this case, the running screws are capable of moving in the direction indicated by Arrow B with the load Δ W1 if the slope angle θ3 of the slope portion of the base is larger than the inclination angle θ2 of the upper-side slope of the screw thread furnished on the running screws (θ2 = 30 degrees, and θ3 = 45 degrees, for example), as shown in Figure 7 (c). If, however, θ3 is smaller than θ2, as shown in Figure 7 (b), the load Δ W2 applies, which moves above the slope portion 1a. Figure 7 (a) illustrates the case of θ2 = θ3, where ΔW1 and Δ W2 do not apply.

To move the running screws in the direction indicated by Arrow B, therefore, the slope angle θ3 of the slope portion of the base is necessarily made larger than both the inclination angle θ2 of the upper-side slope of the screw thread of the running screws and the corresponding inclination angle θ 2, which is equal to the former, of the lower-side slope of the screw thread of the bolt. However, if the inclination angle θ3 of the slope portion is increased, the upward movement of each running screw becomes larger so as to disengage the screw portion when a nut is fitted to the bolt. The spring accordingly needs to be longer in order to secure such a stroke. As a result, the simple fastening device must be large in size and tall in height.

The present invention is made in consideration of the above-mentioned problems. Its purpose is to provide simple fastening devices that are capable of functioning well although using a reduced level of bolt-inserting force, while make the inserting work easier to perform, and that can be small in size though nonetheless of sufficient strength to perform the fastening work.

### Summary of the Invention

For the aforementioned purpose, the invention set forth in Claim 1 has (1) a base inside of which a conical hole with a slope is formed, (2) running screws that (a) are completely penetrated by a female screw to be engaged with the bolt, (b) are guided into the aforementioned conical hole, and (c) expand and contract according to the axial movement of the bolt that is inserted into the aforementioned base, (3) a spring that pushes the running screws against the surface of the aforementioned conical hole, and (4) a cap that (a) has a bolt-insertion hole, (b) is attached to the aforementioned base so as to press the aforementioned spring, and (c) is characterized such that the inclination angle of the lower-side slope is larger than the inclination angle of the upper-side slope of the screw thread on the female screw of the aforementioned running screws.

In the case of this invention, the diameter-expanding force of the running screws, which is produced by the inserting force of the bolt, is increased because the inclination angle of the lower-side slope is larger than the inclination angle of the upper-side slope of the screw thread of the female screw of the running screws. Consequently, the bolt is more easily inserted with less force.

Furthermore, the diameter-expanding force, working on the slope portion of the base, is reduced, because the inclination angle of the upper-side slope is smaller than the inclination angle of the lower-side slope of the screw thread of the female screw of the aforementioned running screws. As a result, the base is not damaged, and it is not necessary to increase the thickness of the base. Also, because the running screw can move along the slope portion, even if the inclination angle of the slope portion of the base is small the spring force can be small and a short spring can be used, which makes it possible to miniaturize the device.

The invention set forth in Claim 2 is the invention as set forth in Claim 1, but is characterized such that the inclination angle of the upper-side slope is larger than the inclination angle of the lower-side slope of the screw thread of the male screw of the aforementioned bolt.

In the case of this invention, the workings of the Claim 1 invention can be more easily and steadily done because the screw thread of the bolt corresponds to the screw thread of the running screws in Claim 1.

### Brief Descriptions of the Drawings

Figure 1 illustrates an embodiment of the present invention, a plane view of which is shown in (a) and a cross-sectional view of which is shown in (b).
Figure 2 is a cross-sectional view of the base.
Figure 3 is a cross-sectional view showing the state of bolt-insertion.
Figure 4 is a cross-sectional view showing the state of bolt-fastening work.
Figure 5 illustrates a simple fastening device of the prior art; (a) is a cross-sectional view showing the state before insertion of a bolt, and (b) is a cross-sectional view showing the state of bolt-fastening work.
Figure 6, (a) through (c), are cross-sectional views that illustrate the workings of a simple fastening device of the prior art.
Figure 7, (a) through (c), are cross-sectional views that illustrate the relationship, seen in the simple fastening devices of the prior art, between the slope portion of the base and the inclination angle of the screw thread of the running screws.

### Description of the Preferred Embodiment

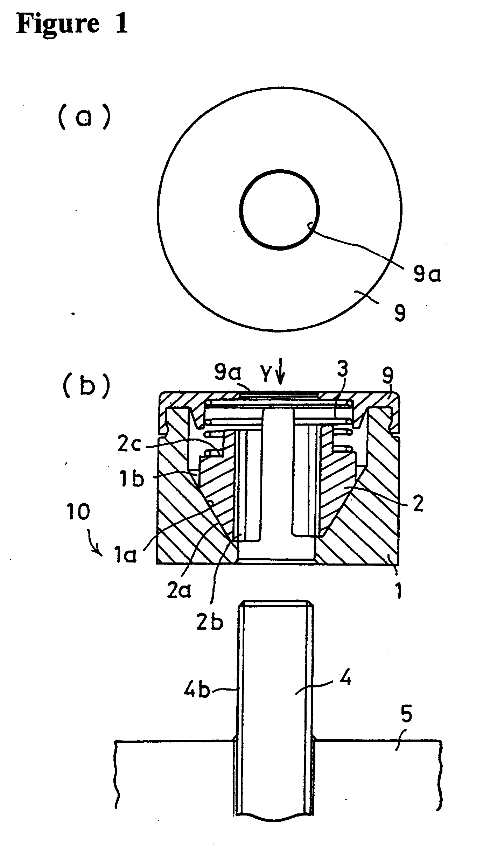

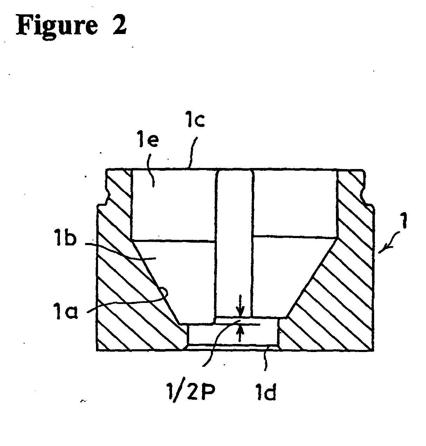

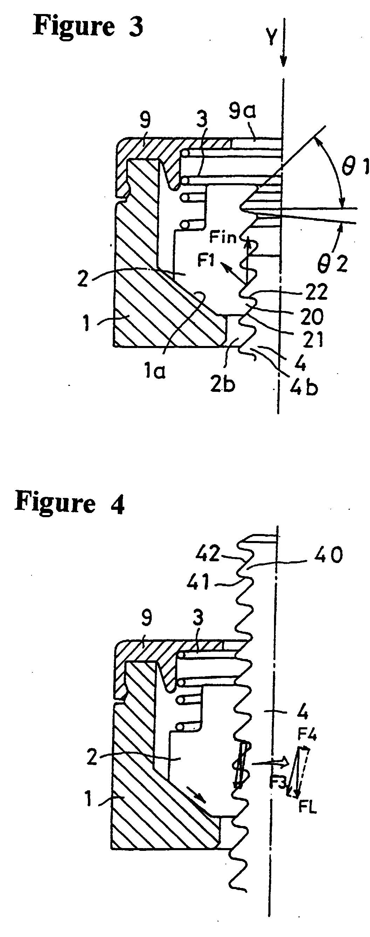

Figures 1 through 4 represent a simple fastening device 10 as one embodiment of the present invention. Figure 1 illustrates the state of the device before fastening work, Figure 2 illustrates the base, and Figures 3 and 4 illustrate the state of fastening work. The same numbers and symbols are used for the elements that are the same in the figures showing the prior art. The simple fastening device 10 in this embodiment is equipped with a base 1, running screws 2, a spring 3, and a cap 9. This device is used for fastening the base to the bolt 4, which is fixed to an object 5.

As shown in Figure 2, half-doughnut-like holes 1e are formed opposite to each other in the base 1. Each of the half-doughnut-like holes 1e adjoins a conical hole 1b, which has a slope portion 1a. These half-doughnut-like holes and conical holes, which taken together form a single hole, have an upper-end hole-portion 1c and a lower-end hole-portion 1d, are formed in the base 1 along its axial line. A bolt 4 is inserted from the lower-end hole-portion 1d. In this embodiment, 2 running screws 2 are inserted into the base 1, and the lower-end region of one of the 2 opposite slope portions 1a of the conical holes 1b is displaced toward the axial line by 1/2 P, which is one-half of the screw pitch of the female screw 2b of the running screws 2. If more than 2 running screws are set, the lower-end of the slope portion 1a of the conical hole 1b can be displaced toward the axial line by the distance of one screw pitch divided by the number of the running screws.

Each of the running screws 2 is shaped like a half-doughnut, inside of which a female screw 2b is formed, as shown in Figure 1 (b). On the outside surface of the running screw 2, a half-conical slope portion 2a, which corresponds to the slope portion 1a of the conical hole 1b of the base 1 is formed. This slope portion 2a contacts with the slope portion 1a of the conical hole 1b. On the top portion of the running screw 2, there is formed a stepped spring-receptor portion 2c for receiving the spring 3.

Each running screw 2 is inserted into the base 1 from the upper end hole-portion 1c and is set into the base 1 such that the screw's slope portion 2a contacts the slope portion 1a of the base 1. In this state, the 2 running screws 2 in a pair can slide up and down along the slope portion 1a of the base 1. As the running screws 2 slides, they expand or contract. In the set-circumstances, the 2 running screws 2 also have corresponding female screws 2b, which are opposite to each other. Each female screw 2b thus penetrates through its respective running screw 2. The female screw 2b is to be engaged with the male screw 4b of the bolt 4.

The spring 3 is set on the spring-receptor portion 2c of the running screw 2. In this state, the cap 9 covers the base 1 and is hooked and fixed into the base 1, whereby the spring 3 pushes the running screw 2. The running screw 2 is thus pushed against and kept in contact with the slope portion 1a of the base 1. Furthermore, there is formed in the cap 9 a bolt-inserting hole 9a, into which the bolt 4 is inserted. On the outside surface of the bolt 4 on the object 5, threads 4b like those on a male screw are formed.

As shown in Figure 1, the device of such a structure can be moved along the Arrow Y, and when the bolt 4 on the object 5 is inserted into the base 1, the device is brought into contact with the object 5. By rotating the base 1 in this contact state, the female screw 2b of the running screws 2 and the male screw of the bolt 4 are engaged. The fastening work is done by this engagement.

Figures 3 and 4 illustrate the relationship between the female screw 2b of the running screw 2 and the male screw 4b of the bolt 4 in the above-mentioned embodiment. In the case of the female screw 2b of the running screw 2, as shown in Figure 3, the inclination angle θ1 of the lower-side slope 21 is designed to be larger than the inclination angle θ2 of the upper-side slope 22 on each screw thread 20 (θ1 > θ 2). For this reason, the tooth profile of the female screw 2b is saw-edged. Furthermore, in the case of the male screw 4b of the bolt 4, the inclination angle of the lower-side slope 41 of each screw thread 40, is θ2, and the inclination angle of the upper-side slope 42 is θ1. Consequently, the inclination angle of the upper-side slope 42 is designed to be larger than the inclination angle of the lower-side slope 41. Accordingly, the male screw of the bolt 4 is also formed to be saw-edged.

When such a simple fastening device overlaps a bolt 4 along the direction indicated by Arrow Y in Figure 1 so as to receive the bolt 4, the inserting force Fin produces the force F1 on the surface of the upper-side slope 42 of the screw thread 40 on the bolt 4, and that force is exerted against the running screw 2 so as to expand the diameter of the running screw. In the case of this embodiment, the inclination angle on the lower-side slope 21 is designed to be larger than the inclination angle on the upper-side slope 22 of each screw thread 20 of the female screw 2b of the running screws 2, and also the inclination angle of the upper-side slope 42 is designed to be larger than the inclination angle of the lower-side slope 41 of each screw thread 40 of the bolt 4. Therefore, the inclination angles of the lower-side slope 21 of the female screw 2b and of the upper-side slope 42 of the bolt 4 are larger than the inclination angle of the screw thread in the prior art. This makes it possible to increase the diameter-expanding force F1 that results from an increased inserting force Fin, and to make the running screws 2 more easily expand along the diameter, and as a result, to make the running screws 2 more easily disengaged from the male screw 4b of the bolt 4. For this reason, it is possible to insert the bolt 4 with a smaller inserting force, as well as to insert it smoothly, without occurring a galling phenomenon.

After this simple fastening device 10 is inserted so as to contact with the object 5, to which the bolt 4 is fixed, if it is a right-handed screw a clockwise rotation causes, with a force applied by the lower-side slope 41 of the screw thread 40 on the bolt 4, the running screws 2 to move along the slope portion 1a of the conical hole 1b in the direction indicated by Arrow b, as shown by Figure 6 (c). Thus, the running screw 2 is engaged and fastened to the bolt 4. In this fastening work, a diameter-expanding direction force W works on the slope portion 1a of the base 1. In this embodiment, the inclination angle θ2 of the upper-side slope 22 is designed to be smaller than the inclination angle θ1 of the lower-side slope 21 of each screw thread 20 of the running screws 2, while the inclination angle of the lower-side slope 41 is designed to be smaller than the inclination angle of the upper-side slope 42 of each screw thread 40 of the bolt 4, so as to make these angles smaller than the inclination angle of the screw thread of the prior art. This makes the diameter-expanding-direction force W smaller, preventing the force W from damaging the base 1. Because the base is not damaged, greater fastening force can be applied if the thickness of the base 1 is the same as that in the prior art, and thereby the fastening strength can be improved. Furthermore, the device can be used in less-spacious places because it does not require that the base 1 be of large thickness.

In this embodiment, the downward load becomes large, but damage of the lower parts is prevented because of the reinforcement by the object 5 on which the bolt 4 is fixed.

Furthermore, in this embodiment, because the inclination angle θ2 at the upper-side slope 22 of each screw thread 20 of the running screws 2 and the inclination angle of the lower-side slope 41 of each screw thread 40 of the bolt 4 are designed to be smaller than the inclination angle of the screw thread of the prior art, the running screws 2 can move along the slope portion 1a of the base 1 in the direction indicated by Arrow b, as shown in Figure 6 (c), even when the slope portion 1a of the base 1 has a smaller inclination angle of θ3. As a result, the movement of the running screws 2 that is required to disengage the screws is reduced. This makes the compression volume by the spring 3 accordingly smaller, which enables the device to have a lower height and to be smaller in size overall.

### Possibility of Industrial Utilization

As explained above, the simple fastening device of the present invention has the following effects:
(1) Easy insertion of the bolt: When the bolt is inserted, the running screws are easily disengaged from the screw portion of the bolt by their efficient movement along the diameter. As a result, the bolt-inserting force that is required is reduced.
(2) Smaller height of the device: A smaller vertical stroke, which is made possible by the smaller inclination angle of the slope portion of the base, reduces the height of the whole device.
(3) Improved fastening strength: When the bolt is fastened, the reduced diameter-expanding force of the running screws that is necessary prevents damage to the base.

## Claims

1. A simple fastening device that has (1) a base, inside of which a conical hole having a slope is formed, (2) running screws that are penetrated by a female screw that is engaged with a bolt and that is led by the aforementioned conical hole and that expands and contracts according to the axial movement of the bolt inserted into the aforementioned base, (3) a spring that pushes the running screws against the aforementioned conical hole, and (4) a cap that is a crown on the upper region of the base, that holds the aforementioned spring, and that is characterized such that the inclination angle of the lower-side slope of the screw thread is designed to be larger than the inclination angle of the upper-side slope in the female screw of the running screws.

2. A simple fastening device as set forth in Claim 1, which is characterized such that the inclination angle of the upper-side slope of the screw thread is designed to be larger than the inclination angle of the lower-side slope in the aforementioned bolt.
